# EUROPEAN PATENT APPLICATION

(11) **EP 4 475 039 A1**
(43) Date of publication of application: **11.12.2024**
(21) Application number: 23177518.0
(22) Date of filing: 06.06.2023
(51) Int. Cl.: G06N 3/096, G06N 3/0455

(54) **DEBIASING NETWORK AND SYSTEM AND VEHICLE INCLUDING THE SAME**

(71) Applicant: e.solutions GmbH, 85055 Ingolstadt (DE)
(72) Inventor: Köhler, Thomas, 90766 Fürth (DE); Koch, Tobias, 91054 Erlangen (DE)
(74) Representative: Schornack, Oliver

(57) **Abstract**

The present disclosure relates to a system (100) for refining feature extraction. The system comprises a pre-trained feature extractor (130) configured to receive input data and extract a basic feature (140) from the received data, a debiasing network (150) configured to receive the basic feature as an input and to extract a debiased feature (154) therefrom, and a classifier (170) configured to classify the debiased feature and to output a classification result. The debiasing network (150) has an input dimensionality corresponding to the basic feature (140) and an output dimensionality that is equal to the input dimensionality.

## Description

The present disclosure generally relates to a system for refining feature extraction and a vehicle comprising such system. Particularly, the present disclosure relates to a debiasing network operating on the output of a pre-trained feature extractor, in order to remove a bias of the extracted features.

A conventional feature extractor, such as any neural network, is trained on large datasets. The training usually takes place off-line, i.e. on dedicated computing systems and with specifically prepared datasets for the training phase of the network. As a mere example, a feature extractor may be trained on RGB images showing, for example, faces to train the feature extractor for a face identification or recognition task.

However, the actual real-world data, which is fed to the feature extractor during the online phase, i.e. the actual identification or recognition task, may differ from the prepared datasets. As a mere example, it is quite unlikely that the prepared datasets for training include images of faces of people to be identified or recognised by the trained system. Moreover, different image sensors may be employed, such as the training dataset including only RGB images, while the system employing the trained feature extractor has a near infrared (NIR) image sensor.

It is therefore an object of the present disclosure to provide an improved feature extraction system overcoming the above problems.

This object is solved by the present invention as defined in the independent claims. Preferred embodiments are defined by the dependent claims.

According to a first aspect to better understand the present disclosure, a system for refining feature extraction comprises a pre-trained feature extractor configured to receive input data and extract a basic feature from the received data, wherein the extracted basic feature allows classification of the received input data. The pre-trained feature extractor can be a conventional feature extractor, such as a neural network. The pretraining may be performed on training data (datasets) consisting of pairs of data and associated class labels. The pre-trained feature extractor, hence, can be any conventional feature extractor that is trained in any conventional manner.

Due to the difference between training data and real-world data, on which the system operates, the extracted feature may have or include a bias. A bias is a deviation or error in the results, particularly, in the results of a subsequent classification or regression of the input data. In other words, the probability of erroneously classified data, i.e. an erroneous result of a subsequent conventional classification, may be increased, particularly the more the training data deviate from real-world data.

In order to avoid or at least reduce this bias, the system further comprises a debiasing network configured to receive the basic feature as an input and to extract a debiased feature therefrom. Furthermore, the debiasing network has an input dimensionality corresponding to the basic feature and an output dimensionality that is equal to the input dimensionality. Thus, the output of the debiasing network does not require any change to a subsequent component, such as a subsequent component developed and implemented for the pre-trained feature extractor.

The system further comprises a classifier configured to classify the debiased feature and to output a classification result. The classifier can be a conventional classifier or a classifier configured to work together with the pre-trained feature extractor or a classifier trained together with the pre-trained feature extractor.

In other words, the debiasing network is "set on top" of a conventional feature extractor and allows adaptation of the final classification or regression of the input data. The debiasing network can be considered as "prescription glasses" for the feature extractor adapted to the real-world data.

Moreover, conventionally in order to remove bias from the results of the feature extractor, the feature extractor has to be re-trained, for example on additional datasets, such as real-world data. Such re-training or interval training of the feature extractor requires a lot of processing power. This processing power, however, is not available in a lot of devices implementing or employing the feature extractor and classifier. Thus, such low processing power devices would usually not be able to overcome the bias issues.

Employing the debiasing network of the present disclosure allows improvement and refinement of the feature extraction, with less processing power. As only the layers of the debiasing network have to be trained, the processing power of such devices is usually sufficient to perform such task.

As a mere example, the pre-trained feature extractor and classifier may be employed for object detection, face identification, writer identification, speech recognition or the like. The detection can be based on sensor data, such as image data of an image sensor, touch input data of a touch input device, audio data of a microphone, etc.. The likelihood of different sensors used for the datasets, on which the feature extractor is pre-trained, and used by the actual system is quite high. Thus, a bias may be present already due to different sensors (e.g., RGB image data for training and NIR-sensor used in the actual system employing the pre-trained feature extractor). Other factors may lead to a bias between the training data and the actual real-world data of the current system, such as different groups of people in face recognition for training data and the actual real-world data. In facial recognition, for example, it is very likely that certain individuals were not part of the off-line training data set, but that these individuals need to be recognised or identified based on the pre-trained feature extractor.

By employing the debiasing network, the pre-trained feature extractor does not have to be modified, which saves updating and/or re-training costs. Additionally, privacy issues may also be avoided, since the actual system running the pre-trained feature extractor does not need to receive training data including private information, such as biometric data or the like. The debiasing network can operate on real-world data, i.e. data of individuals using the system and hence able to confirm processing of their personal data. In addition, such personal data does not have to be stored (for time periods longer than usual buffering during classification and training the system) or transmitted in a communication network, since the debiasing network can operate online (i.e., on the fly).

It is to be noted that the present disclosure is independent of the method, technique and/or model underlying the feature extractor. Thus, the pre-trained feature extractor can be handled as a "black box" that maintains unaltered in the system achieving great flexibility.

Furthermore, it is to be understood that the present disclosure refers to "a" basic feature, although this should not restrict the present disclosure to a single basic feature. It is rather also possible that the feature extractor extracts a plurality of basic features.

In an implementation variant, the extracted basic feature can be an element of an embedding from any kind of feature extractor. Furthermore, the embedding can likewise be a plurality of features. An embedding in the context of a feature extractor, such as a neural network, is a mapping of a discrete variable (the received data or input data) to a vector of continuous numbers. In other words, embeddings are low-dimensional, learned continuous vector representations of discrete variables. Neural network embeddings allow reducing the dimensionality of categorical variables and meaningfully represent categories in the transformed space.

In another implementation variant, the system can further comprise an updating unit configured to train the debiasing network based on the basic feature of the pre-trained feature extractor, the debiased feature of the debiasing network, and an expected result of the classifier. In other words, a training process is performed by the updating unit that is comparable to training of the feature extractor.

However, the debiasing network is of lower dimensionality compared to the pre-trained feature extractor, which simplifies training of the debiasing network with respect to processing power and processing costs. Thus, even systems of lower processing power, such as embedded systems, are capable of training/updating the debiasing network, to achieve an accurate system for extracting features.

The updating unit can be activated at an initiating phase of the system, for example, the first time that the system is employed. Alternatively or additionally, the updating unit can be activated at particular intervals (time intervals and/or task-based intervals). This allows improving the system and further refining feature extraction by optimising the debiasing network.

In a further implementation variant, the debiasing network can be trained to remove a bias between the basic feature and the debiased feature by subtraction. In other words, the debiasing network learns the bias in such a way that it can be removed by the final subtraction, i.e. it is an additive bias. It is to be understood that this is only one possibility of implementing the updating/training process, and training the debiasing network by addition is likewise possible.

In yet a further implementation variant, the system can further comprise a weighting unit configured to weight the output of the debiasing network. The weighting unit can be employed to prevent extreme deviations from the basic feature. The operation of the weighting unit can be implemented by a selectable factor or a trainable factor, the latter of which can be trained/updated by the updating unit.

In a particular implementation variant, the weighting unit can be configured to weight an intermediate output of the debiasing network, such as the result of a particular layer of the debiasing network. For instance, the weighting may be applied to the majority of layers of the debiasing network. As a mere example, the output of a trainable portion of the debiasing network is weighted, while a last fixed layer is applied to the weighted result.

In another implementation variant, the debiasing network can comprise one or more batch normalisation layers, and/or one or more rectified linear unit function layers, and/or one or more fully connected layers. In other words, the debiasing network can consist of one, two or more layers, which may include a batch normalisation (BN) layer, a rectified linear unit (ReLU) function layer and/or a fully connected (FC) layer or any combination thereof. As a mere example, at least one block of a BN layer, and ReLU function layer and an FC layer forms (at least a portion of) the debiasing network.

Alternatively, the debiasing network or a portion thereof can comprise an autoencoder. An autoencoder is a special neural network architecture that can be divided into two parts: encoder and decoder. The encoder transforms the input data, for example, the embedding of the feature extractor, into a lower dimensional embedding. The decoder transforms the low dimensional embedding back to the encoded representation. In other words, the dimensionality of the embedding is temporarily reduced in this implementation variant of the debiasing network. As a mere example, at least two blocks of a BN layer, and ReLU function layer and an FC layer forms (at least a portion of) the debiasing network, where the first block reduces the dimensionality of the embedding, and the second block recreates the input dimensionality.

According to a second aspect to better understand the present disclosure, a vehicle comprises at least one sensor configured to output sensor data, and a system for refining feature extraction according to the first aspect or one of its variants. Specifically, the pre-trained feature extractor of the system receives the output sensor data and extracts the basic feature therefrom.

Thus, since a computational unit in a vehicle is usually an energy-saving or small device with less processing power, the vehicle can still be equipped with a feature extractor to perform a particular task in the vehicle, and which provides robust results. In addition, the same system can be implemented in different types of vehicles, particularly vehicles having different kinds of sensors for sensing similar items, such as cameras, microphones, or the like. Likewise, the same system can be implemented vehicles sold to different regions of the world, where a particular language is spoken (relevant for speech recognition) or the users are of a particular ethnic group (relevant for face recognition and user identification).

In an implementation variant, the system is implemented on an engine control unit or an infotainment system of the vehicle. Thus, even low-power processing units already installed in a vehicle can be equipped to perform feature extraction of high reliability.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a system for refining feature extraction;
- Figure 2: schematically illustrates a debiasing network in more detail;
- Figure 3: schematically illustrates an exemplary updating of a debiasing network;
- Figure 4: schematically illustrates an exemplary feature extraction; and
- Figure 5: schematically illustrates a vehicle comprising a system for refining feature extraction.

In the following description, for purposes of explanation and not limitation, specific details are set forth in order to provide a thorough understanding of the present disclosure. It will be apparent to one skilled in the art that the present disclosure may be practiced in other implementations that depart from these specific details.

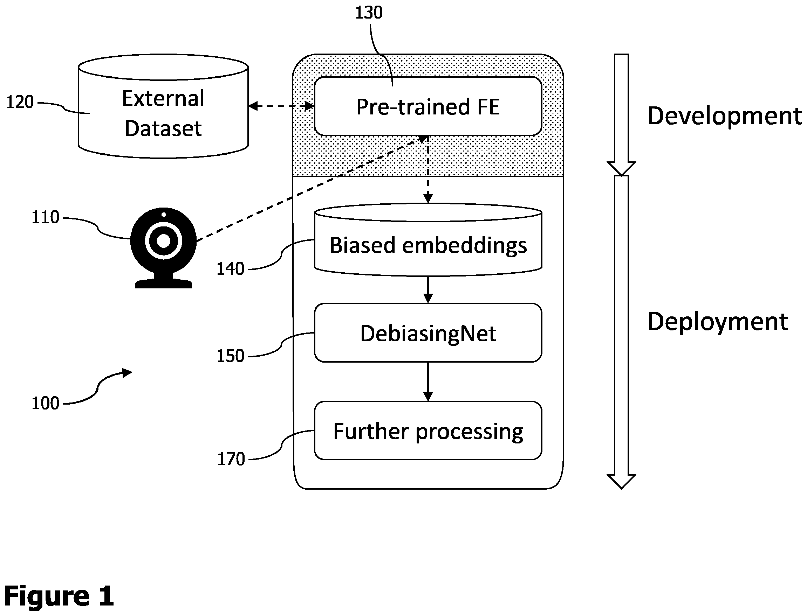

Figure 1 schematically illustrates a system 100 for refining feature extraction. The schematic illustration of the system 100 is split into components employed during development of the system 100 and components employed during deployment of the system 100.

For instance, a pre-trained feature extractor 130, such as a neural network (e.g., a convolutional neural network CNN, including VGG16/19, InceptionV3, ResNet34/50, SENet, MobileNet(V2), EfficientNetB0/1/.../7, ConvNeXt, or the like) can form the core of the system 100. This feature extractor 130 is pre-trained, i.e. has been trained to perform a certain feature extraction, such as classification or regression of images, audio input, handwriting or the like. The pre-training takes place on the basis of an external dataset 120. This dataset can be a publicly available large dataset, such as a collection of images, voice, sounds, handwriting samples, and the like. Examples for such datasets are ImageNet, VGGFace2, MS-Celeb-1M, CASIA-WebFace, IJB-B, TIMIT, IAM, or the like. As a mere example, the external dataset 120 can include a number of images of faces and corresponding classifications/labels, such as female/male, wearing glasses, having a beard, hair colour, biometric information/categories, etc.. The feature extractor 130 is trained on this data to perform correct classification/regression of any input image.

Since this pre-training of the feature extractor 130 is computationally intensive and requires a large processing power, it is performed by corresponding powerful computing systems in advance. Thus, the portion of the system 100 indicated in Figure 1 as "Development" reflects the setup of a standard/conventional feature extraction.

The pre-trained model (feature extractor) 130 can then be implemented (downloaded or otherwise stored) in the system 100 for deployment. At runtime ("Deployment"), real-world data is provided to the pre-trained feature extractor 130. For instance, the system 100 can comprise a sensor 110 (exemplarily illustrated as a camera) which produces input data for the system 100. The feature extractor 130 extracts a basic feature from the input data. The basic feature can refer to any number of features or embeddings depending on the type and dimensionality of the pre-trained feature extractor 130.

The present disclosure considers the output of the feature extractor 130 as including an error or bias. For instance, the camera 110 (or other sensor) can be a different camera 110 or different type/kind of camera 110 as it was employed for generating the dataset 120. Likewise, the kind of data (image, sound, voice, handwriting, etc.) in dataset 120 may not cover the real-world data sensed and provided by the sensor 110. For instance, although the external dataset 120 may include a vast number of images showing faces, none of these images may actually show the face of a person sitting in front of the camera 110 to be recognised or identified. Thus, the feature extractor 130 may produce an error in its results without the possibility of re-training of the feature extractor 130.

Therefore, Figure 1 identifies the output of the feature extractor 130 as including a bias, for example, as biased embeddings 140. The system 100 further includes a debiasing network 150 configured to receive the basic feature of the feature extractor 130 and to extract a debiased feature therefrom. The debiasing network 150 as an input dimensionality corresponding to the basic feature 140 extracted by the feature extractor 130. Furthermore, the output dimensionality of the debiasing network 150 is equal to the input dimensionality.

This allows employing further processing 170 on the debiased feature in the same manner as on the basic feature 140. As a mere example, the further processing 170 can be configured to classify or label the basic feature 140, but in the system 100 the further processing 170 operates on/with the debiased feature from the debiasing network 150.

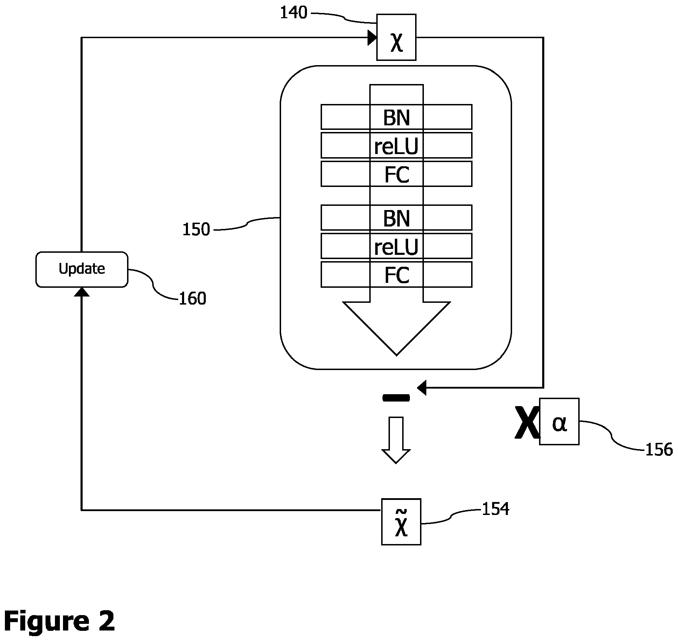

Figure 2 schematically illustrates a debiasing network 150 in more detail. As a mere example, Figure 2 illustrates the debiasing network 150 as consisting of six layers. It is to be understood that the debiasing network 150 can consist of any number of layers required to debiased the basic feature 140. Furthermore, as a further mere example, the debiasing network 150 can consist of blocks of layers or groups of layers with similar functionality. Figure 2 exemplarily illustrates two blocks of three layers each, wherein a first layer is a batch normalisation layer (BN), a second layer is rectified linear unit function layer (ReLU), and a third layer is a fully connected layer (FC). It is to be understood that these layers are only exemplarily mentioned and that one or more of the layers can be omitted, repeated or can be provided in any combination.

The debiasing network 150 is trained in such a manner that the bias is considered as an additive bias and the debiasing network 150 removes the bias by subtraction "-". It is to be understood that this is only one possibility of training the debiasing network 150 and removing the bias.

In order to avoid extreme deviation from the basic feature 140 (biased embeddings), a weighting unit 156 can be provided that is configured to weight the output of the debiasing network 150. For example, the weighting unit 156 can influence the subtraction, such as by multiplication with a factor "α".

The system 100 can comprise an updating unit 160 configured to train the debiasing network 150 based on the basic feature 140 of the feature extractor 130, the debiased feature 154 of the debiasing network 150, and an expected result of the classifier 170. The updating unit 160 can operate at an initial phase of the system deployment and/or at particular intervals during operation of the system 100.

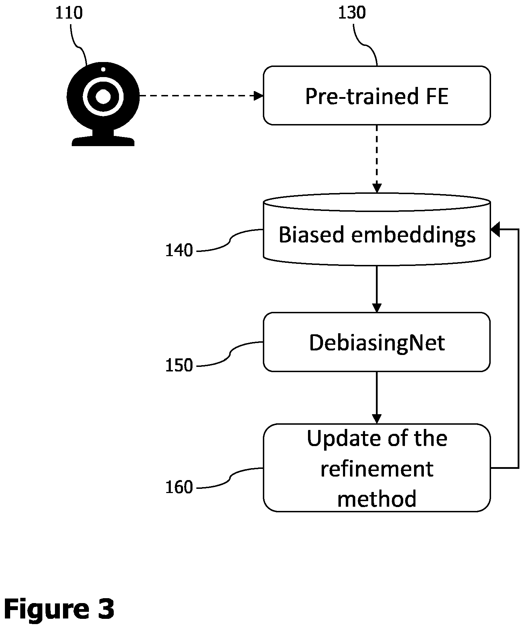

Figure 3 schematically illustrates an exemplary updating of a debiasing network 150. Since the pre-trained feature extractor 130 is not changed during the training phase of the system 100, the updating unit 160 modifies only the debiasing network 150. This is illustrated in Figure 3 by the arrow looping back to the biased embeddings 140, as this is the unaltered starting point for the re-run of the debiasing network 150.

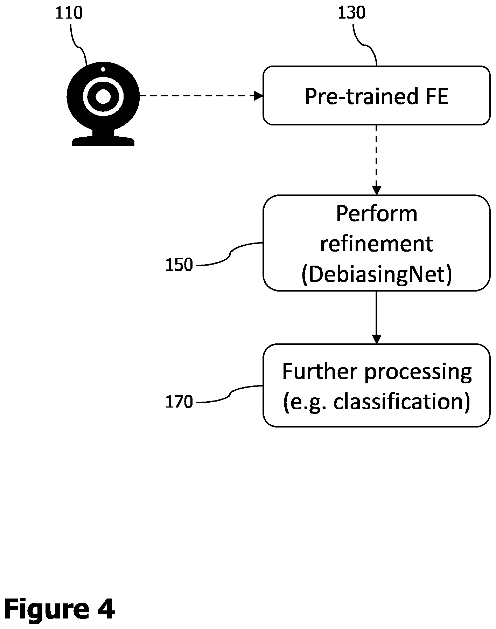

Figure 4 schematically illustrates an exemplary feature extraction during "Deployment". In other words, Figure 4 illustrates the components of the system 100 implemented for runtime. Specifically, the system 100 comprises the pre-trained feature extractor 130, the debiasing network 150 and the classifier 170. The classifier 170 is configured to classify the debiased feature (output of the debiasing network 150) and to output a classification result or a regression result of the debiased feature.

The system 100 can cooperate with a sensor 110, which produces data fed to the pre-trained feature extractor 130. The sensor data is the data to be classified or labelled by classifier 170.

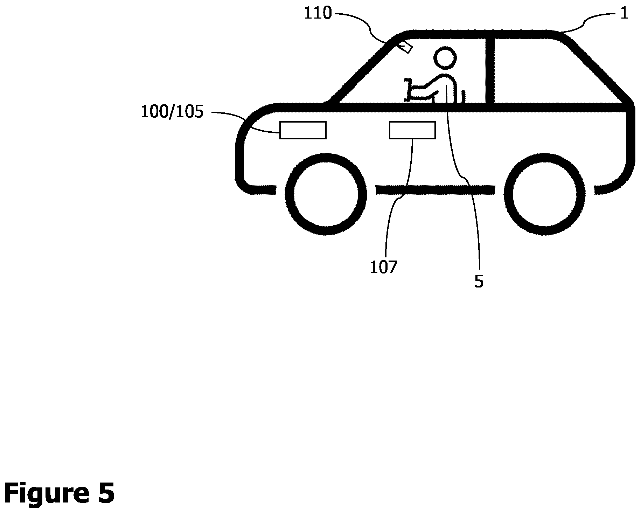

Figure 5 schematically illustrates a vehicle 1 comprising a system 100 for refining feature extraction. The vehicle 1 can be a car operated by a driver 5. As a mere example, the system 100 may be employed to identify the driver 5, recognise a posture of the driver 5, recognise speech input of the driver 5, etc.. To do so, the vehicle comprises a sensor 110, which can be a camera, a microphone, a touch screen, a touch panel or the like.

The system 100 (see for example Figure 1) can be implemented on an engine control unit 105 of the vehicle 1. Alternatively or additionally, the system 100 can be implemented in an infotainment system 107 of the vehicle 1. The engine control unit 105 as well as the infotainment system 107 are usually devices of low processing power, as the intended tasks (engine control, media playback, navigation, etc.) are not processing intensive. Due to the debiasing network 150 operating on a lower dimensionality than the initial dimensionality of the feature extractor 130, the debiasing network 150 can run on such low processing devices 105, 107. In addition, even the updating unit 160 can run on such low processing devices 105, 107.

It is to be understood that other low processing devices can be used to deploy the system 100. For instance, mobile phones, tablets, laptops, home appliance devices, or the like can be low processing devices, which can be enhanced by installing the system 100.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A system (100) for refining feature extraction, the system comprising:
a pre-trained feature extractor (130) configured to receive input data and extract a basic feature (140) from the received data, wherein the extracted basic feature (140) allows classification of the received input data;
a debiasing network (150) configured to receive the basic feature (140) as an input and to extract a debiased feature (154) therefrom; and
a classifier (170) configured to classify the debiased feature and to output a classification result,
wherein the debiasing network (150) has an input dimensionality corresponding to the basic feature (140) and an output dimensionality that is equal to the input dimensionality.

2. The system of claim 1, further comprising:
an updating unit (160) configured to train the debiasing network (150) based on the basic feature (140) of the pre-trained feature extractor, the debiased feature (154) of the debiasing network, and an expected result of the classifier.

3. The system of claim 1 or 2, wherein the debiasing network is trained to remove a bias between the basic feature and the debiased feature by subtraction.

4. The system of one of claims 1 to 3, further comprising:
a weighting unit (156) configured to weight the output of the debiasing network (150).

5. The system of one of claims 1 to 4, wherein the debiasing network (150) comprises one or more batch normalisation layers, and/or one or more rectified linear unit function layers, and/or one or more fully connected layers, or
wherein the debiasing network comprises an autoencoder.

6. A vehicle (1), comprising:
at least one sensor (110) configured to output sensor data; and
a system (100) for refining feature extraction according to one of claims 1 to 5, wherein the pre-trained feature extractor (130) of the system (100) receives the output sensor data and extracts the basic feature therefrom.

7. The vehicle of claim 6, wherein the system (100) is implemented on an engine control unit (105) or an infotainment system (107) of the vehicle.
